# EUROPEAN PATENT APPLICATION

(11) **EP 4 404 287 A1**
(43) Date of publication of application: **24.07.2024**
(21) Application number: 21957038.9
(22) Date of filing: 15.09.2021
(51) Int. Cl.: H01M 4/02, H01M 4/505, H01M 4/525

(54) **ELECTROCHEMICAL DEVICE AND ELECTRONIC DEVICE**

(71) Applicant: Ningde Amperex Technology Limited, Ningde, Fujian 352100 (CN)
(72) Inventor: ZHANG, Yangyang, Ningde, Fujian 352100 (CN)
(74) Representative: Klunker IP Patentanwälte PartG mbB
(86) International application number: PCT/CN2021/118515
(87) International publication number: WO 2023/039748

(57) **Abstract**

This application provides an electrochemical apparatus and an electronic apparatus. The electrochemical apparatus includes a positive electrode plate, where the positive electrode plate includes a positive electrode material layer, the positive electrode material layer includes a positive electrode active material, elements in the positive electrode active material include Li, Mn, Ni, Co, and Fe, and the positive electrode active material satisfies at least one of the following characteristics: (i) a ratio A of the number of Mn atoms to a total number of Ni, Co, and Fe atoms being 3.5 to 40; and (ii) a ratio B of the number of Li atoms to a total number of Mn, Ni, Co, and Fe atoms being 0.51 to 0.79. The elements in the positive electrode active material are controlled to satisfy the range of A and/or B, which helps to improve overall performance of the electrochemical apparatus.

## Description

### TECHNICAL FIELD

This application relates to the electrochemical field, and in particular, to an electrochemical apparatus and an electronic apparatus.

### BACKGROUND

As lithium-ion batteries have advantages such as high energy density, long cycle life, and zero memory effect, they have been widely used in wearable devices, smart phones, unmanned aerial vehicles, electric vehicles, large-scale energy storage devices, and other fields. Currently, they have become the most promising new green chemical power source in the world, but higher requirements are imposed on overall performance of lithium-ion batteries.

The performance of lithium-ion batteries mainly depends on characteristics of positive electrodes, negative electrodes, electrolytes, and separators. Active materials in the positive electrode and the negative electrode are one of the important factors affecting the performance of lithium-ion batteries. As common positive electrode materials, ternary layered lithium nickel cobalt manganate, lithium manganite oxide, and lithium iron phosphate are widely used in fields of electric vehicles and electric bicycles. However, batteries still have at least one of the problems of short service life, undesirable cycling performance, and undesirable high- and low-temperature storage performance, that is, the overall performance of lithium-ion batteries still needs to be improved.

### SUMMARY

This application is intended to provide an electrochemical apparatus and an electronic apparatus, so as to improve overall performance of electrochemical apparatuses.

A first aspect of this application provides an electrochemical apparatus. The electrochemical apparatus includes a positive electrode plate, where the positive electrode plate includes a positive electrode material layer, the positive electrode material layer includes a positive electrode active material, elements in the positive electrode active material include Li, Mn, Ni, Co, and Fe, and the positive electrode active material satisfies at least one of the following characteristics: (i) a ratio A of the number of Mn atoms to a total number of Ni, Co, and Fe atoms being 3.5 to 40; and (ii) a ratio B of the number of Li atoms to a total number of Mn, Ni, Co, and Fe atoms being 0.51 to 0.79. Without being bound by any theory, the elements in the positive electrode active material are controlled to satisfy the range of A and/or B, helping to improve overall performance of the electrochemical apparatus. For example, the electrochemical apparatus has relatively long service life, good high-temperature storage performance, low-temperature performance, and cycling performance, and the like. In this application, low temperature means temperature being less than or equal to 0°C, and high temperature means temperature being greater than or equal to 40°C.

For example, the ratio A of the number of Mn atoms to the total number of Ni, Co, and Fe atoms may be 3.5, 5, 10, 15, 20, 25, 30, 35, 40, or in any range therebetween. Without being bound by any theory, the inventors of this application have found that when the ratio A of the number of Mn atoms to the total number of Ni, Co, and Fe atoms is excessively small (for example, less than 3.5), the electrochemical apparatus has undesirable low-temperature performance. For example, the capacity retention rate at low temperature decreases, which affects the overall performance of the electrochemical apparatus. When the ratio A of the number of Mn atoms to the total number of Ni, Co, and Fe atoms is excessively large (for example, greater than 40), the positive electrode plate is prone to dissolution of manganese at high temperature, resulting in degradation of the high-temperature storage performance and cycling performance of the electrochemical apparatus and shortening the service life of the electrochemical apparatus, thereby affecting the overall performance of the electrochemical apparatus. The ratio A of the number of Mn atoms to the total number of Ni, Co, and Fe atoms being controlled within the above range can improve the migration efficiency of lithium ions and effectively inhibit dissolution of manganese in the positive electrode plate, helping to improve the low-temperature performance, high-temperature storage performance, cycling performance, and service life of the electrochemical apparatus and thereby improving the overall performance of the electrochemical apparatus.

For example, the ratio B of the number of Li atoms to the total number of Mn, Ni, Co, and Fe atoms may be 0.51, 0.53, 0.55, 0.58, 0.6, 0.65, 0.7, 0.73, 0.76, 0.79, or in any range therebetween. Without being bound by any theory, the inventors of this application have found that when the ratio B of the number of Li atoms to the total number of Mn, Ni, Co, and Fe atoms is excessively small (for example, less than 0.51), the electrochemical apparatus has undesirable high-temperature storage performance and cycling performance, and short service life, which affects the overall performance of the electrochemical apparatus. When the ratio B of the number of Li atoms to the total number of Mn, Ni, Co, and Fe atoms is excessively large (for example, greater than 0.51), the electrochemical apparatus has undesirable low-temperature performance, which also affects the overall performance of the electrochemical apparatus. The ratio B of the number of Li atoms to the total number of Mn, Ni, Co, and Fe atoms being controlled within the above range can improve the migration efficiency of lithium ions and effectively inhibit dissolution of manganese in the positive electrode plate, helping to improve the low-temperature performance, high-temperature storage performance, cycling performance, and service life of the electrochemical apparatus, thereby improving the overall performance of the electrochemical apparatus.

In some embodiments of this application, 6 ≤ A/B ≤ 40. For example, the value of A/B may be 6, 10, 15, 20, 25, 30, 35, 40, or in any range therebetween. Without being bound by any theory, the inventors of this application have found that the value of A/B being controlled within the above range helps to obtain good low-temperature performance, high-temperature storage performance, and cycling performance, and long service life. In other words, this helps the electrochemical apparatus to obtain good overall performance.

In some embodiments of this application, the positive electrode plate in the electrochemical apparatus and lithium metal are assembled into a button cell; and in a first-cycle charge capacity differential curve of the button cell, a ratio P of an area of a peak at 4.4 V to 4.6 V to an area of a peak at 3.9 V to 4.6 V is 0.005 to 0.2, and preferably 0.05 to 0.2. For example, a value of P may be 0.005, 0.01, 0.05, 0.1, 0.15, 0.2, or in any range therebetween. Without being bound by any theory, the inventors of this application have found that when the value of P is excessively small (for example, less than 0.005), the electrochemical apparatus has undesirable high-temperature storage performance and cycling performance. When the value of P is excessively large (for example, greater than 0.2), the electrochemical apparatus has obviously degraded low-temperature performance. The value of P being controlled within the above range improves the stability of the positive electrode active material, which can effectively reduce dissolution of manganese in the positive electrode plate and can meet the lithium demand of the electrochemical apparatus in a cycling process, helping to improve the cycling performance and high-temperature storage performance of the electrochemical apparatus. An assembly method of the button cell is not particularly limited in this application, and the button cell may be assembled in an assembly method known in the art.

In some embodiments of this application, 0.21-0.0056A ≤ P ≤ 0.2. For example, a value of P may be 0.19, 0.192, 0.194, 0.196, 0.198, 0.2, or in any range therebetween. Without being bound by any theory, the inventors of this application have found that the values of A and P being controlled to satisfy the foregoing relationship helps to improve the high-temperature cycling performance of the electrochemical apparatus.

In some embodiments of this application, the positive electrode plate in the electrochemical apparatus and lithium metal are assembled into a button cell; and a first-cycle charge and discharge efficiency E of the button cell at 2.8 V to 4.6 V is 90% to 110%. For example, the first-cycle charge and discharge efficiency E of the button cell at 2.8 V to 4.6 V is 90%, 92%, 95%, 98%, 100%, 102%, 105%, 108%, 110%, or in any range therebetween.

In some embodiments of this application, Dᵥ50 of the positive electrode active material is 8 µm to 14 µm, and preferably 8 µm to 13 µm; and Dᵥ90 of the positive electrode active material is less than or equal to 30 µm, and 1.2 ≤ (Dᵥ90 - Dᵥ10)/Dᵥ50 ≤ 2.2.

For example, Dᵥ50 of the positive electrode active material may be 8 µm, 9 µm, 10 µm, 11 µm, 12 µm, 13 µm, 14 µm, or in any range therebetween. Without being bound by any theory, the inventors of this application have found that when Dᵥ50 of the positive electrode active material is excessively small (for example, less than 8 µm), the positive electrode active material is very likely to have side reactions with an electrolyte, which affects the high-temperature storage performance and cycling performance of the electrochemical apparatus. With an increase in Dᵥ50 of the positive electrode active material, side reactions between the positive electrode active material and the electrolyte are reduced. However, when Dᵥ50 of the positive electrode active material is excessively large (for example, greater than 14 µm), the low-temperature performance of the electrochemical apparatus degrades. Dᵥ50 of the positive electrode active material being controlled within the above range helps to improve the high-temperature storage performance, low-temperature performance, cycling performance, and service life of the electrochemical apparatus.

For example, Dᵥ90 of the positive electrode active material may be 5 µm, 10 µm, 15 µm, 20 µm, 25 µm, 30 µm, or in any range therebetween. For example, a value of (Dᵥ90 - Dᵥ10)/Dᵥ50 may be 1.2, 1.3, 1.4, 1.5, 1.6, 1.7, 1.8, 1.9, 2, 2.1, 2.2, or in any range therebetween. Without being bound by any theory, the inventors of this application have found that the values of Dᵥ50, Dᵥ90, and (Dᵥ90 - Dᵥ10)/Dᵥ50 of the positive electrode active material being controlled within the above range helps to improve the high-temperature storage performance, low-temperature performance, cycling performance, and service life of the electrochemical apparatus. Dᵥ10 of the positive electrode active material is not particularly limited in this application, provided that the range of (Dᵥ90 - Dᵥ10)/Dᵥ50 can be met. For example, Dᵥ10 of the positive electrode active material may be 1.0 µm to 17.9 µm. For example, Dᵥ10 of the positive electrode active material may be 1.0 µm, 1.4 µm, 5.6 µm, 11.4 µm, 13.9 µm, 16.0 µm, 17.9 µm, or in any range therebetween.

In some embodiments of this application, the positive electrode active material includes at least one of lithium manganese oxide spinel (LiMn₂O₄), lithium nickel cobalt manganate, lithium iron phosphate (LiFePO₄), or lithium-rich manganese-based material. Without being bound by any theory, the inventors of this application have found that the selection of the foregoing positive electrode active material helps to improve the overall performance of the electrochemical apparatus, for example, the low-temperature performance, high-temperature storage performance, cycling performance, and service life of the electrochemical apparatus.

A preparation method of LiMn₂O₄ is not particularly limited in this application, provided that the objectives of this application can be achieved. For example, LiMn₂O₄ is prepared through synthesis of lithium carbonate and manganese dioxide at 700°C to 750°C, and a synthesis temperature is preferably 730°C.

Lithium nickel cobalt manganate is not particularly limited in this application, provided that the objectives of this application can be achieved. For example, lithium nickel cobalt manganate may include but is not limited to layered lithium nickel cobalt manganate. Specifically, the layered lithium nickel cobalt manganate satisfies a general formula Li(Niₓ₁Co_{y1}Mn_{1-x1-y1})O₂, where x1 ≥ 0, y1 ≥ 0, and x1 + y1 ≤ 1.

Lithium-rich manganese-based material is not particularly limited in this application, provided that the objectives of this application can be achieved. For example, the lithium-rich manganese-based material satisfies a general formula Li_{2-(x2+y2+z1)}Niₓ₂Co_{y2}Mn_{z1}O₂, where x2 ≥ 0, y2 ≥ 0, z1 > 0, and x2 + y2 + z1 < 1.

In some embodiments of this application, an amount of the positive electrode active material in the positive electrode material layer is 320 g/cm² to 480 g/cm². For example, the amount of the positive electrode active material in the positive electrode material layer is 320 g/m², 350 g/m², 380 g/m², 400 g/m², 420 g/m², 440 g/m², 460 g/m², 480 g/m², or in any range therebetween. Without being bound by any theory, the inventors of this application have found that when the amount of the positive electrode active material in the positive electrode material layer is excessively small (for example, less than 320 g/m²), the energy density of the electrochemical apparatus is affected. When the amount of the positive electrode active material in the positive electrode material layer is excessively large (for example, greater than 480 g/m²), it is difficult for some positive electrode active materials to play their functions, resulting in waste of materials and affecting the costs of the electrochemical apparatus. The amount of the positive electrode active material in the positive electrode material layer being controlled within the above range helps to improve the energy density of the electrochemical apparatus and control the costs thereof.

In some embodiments of this application, the electrochemical apparatus further includes an electrolyte, and the electrolyte includes a sulfur-oxygen double bond-containing compound; the sulfur-oxygen double bond-containing compound includes 1,3-propane sultone and/or ethylene sulfate; and based on a total mass of the electrolyte, a mass percentage of the sulfur-oxygen double bond-containing compound is 0.01% to 2%. For example, the mass percentage of the sulfur-oxygen double bond-containing compound may be 0.01%, 0.05%, 0.1%, 0.3%, 0.5%, 0.8%, 1%, 1.3%, 1.5%, 1.8%, 2%, or in any range therebetween. Without being bound by any theory, the electrolyte including the above sulfur-oxygen double bond-containing compound whose mass percentage falls within the above range helps to form a stable solid electrolyte interface (SEI) at the negative electrode so as to inhibit side reactions between the electrolyte and a negative electrode active material, and helps to form a stable cathode electrolyte interface (CEI) at the positive electrode so as to inhibit phase change of the positive electrode, thereby improving the cycling performance of the electrochemical apparatus. The positive electrode of this application may be the positive electrode plate, and the negative electrode may be a negative electrode plate.

The positive electrode plate in this application may further include a positive electrode current collector. The positive electrode current collector is not particularly limited in this application, provided that the objectives of this application can be achieved. For example, the positive electrode current collector may include but is not limited to aluminum foil, aluminum alloy foil, or a composite current collector. In this application, thickness of the positive electrode current collector is not particularly limited, provided that the objectives of this application can be achieved. For example, the thickness of the positive electrode current collector is 8 µm to 12 µm.

The positive electrode material layer in this application may further include a binder. The binder is not particularly limited in this application, provided that the objectives of this application can be achieved. For example, the binder may include but is not limited to at least one of polyacrylic acid, sodium polyacrylate, potassium polyacrylate, lithium polyacrylate, polyvinyl alcohol, carboxymethyl cellulose, sodium carboxymethyl cellulose, polyimide, polyamideimide, styrene-butadiene rubber, or polyvinylidene fluoride.

In this application, the positive electrode material layer may further include a conductive agent. The conductive agent is not particularly limited in this application, provided that the objectives of this application can be achieved. For example, the conductive agent may include but is not limited to at least one of conductive carbon black (Super P), carbon nanotubes (CNTs), carbon fibers, flake graphite, Ketjen black, graphene, metal material, or conductive polymer. The carbon nanotubes may include but are not limited to single-walled carbon nanotubes and/or multi-walled carbon nanotubes. The carbon fibers may include but are not limited to vapor grown carbon fibers (VGCF) and/or carbon nanofibers. The metal material may include but is not limited to metal powder and/or metal fibers, and specifically, the metal may include but is not limited to at least one of copper, nickel, aluminum, or silver. The conductive polymer may include but is not limited to at least one of polyphenylene derivative, polyaniline, polythiophene, polyacetylene, or polypyrrole.

Optionally, the positive electrode plate may further include a conductive layer, and the conductive layer is sandwiched between the positive electrode current collector and the positive electrode material layer. Composition of the conductive layer is not particularly limited in this application, and the conductive layer may be a conductive layer commonly used in the art. For example, the conductive layer may include but is not limited to the foregoing conductive agent and the foregoing binder.

The electrochemical apparatus in this application may further include a negative electrode plate, and the negative electrode plate is not particularly limited in this application, provided that the objectives of this application can be achieved. The negative electrode plate generally includes a negative electrode current collector. The negative electrode current collector is not particularly limited, provided that the objectives of this application can be achieved. For example, the negative electrode current collector may include but is not limited to copper foil, copper alloy foil, nickel foil, stainless steel foil, titanium foil, foamed nickel, foamed copper, or a composite current collector. In this application, thickness of the negative electrode current collector is not particularly limited, provided that the objectives of this application can be achieved. For example, the thickness of the negative electrode current collector is 4 µm to 12 µm.

In this application, the negative electrode plate may further include a negative electrode material layer, and the negative electrode material layer includes a negative electrode active material. The negative electrode active material is not particularly limited in this application, provided that the objectives of this application can be achieved. For example, the negative electrode active material may include but is not limited to at least one of natural graphite, artificial graphite, mesocarbon microbead, hard carbon, soft carbon, silicon, silicon-carbon composite, Li-Sn alloy, Li-Sn-O alloy, Sn, SnO, SnO₂, lithiated spinel TiO₂-Li₄Ti₅O₁₂, or Li-Al alloy.

In this application, the negative electrode material layer may further include a conductive agent. The conductive agent is not particularly limited in this application, provided that the objectives of this application can be achieved. For example, the conductive agent may include but is not limited to at least of the foregoing conductive agents.

In this application, the negative electrode material layer may further include a binder. The binder is not particularly limited in this application, provided that the objectives of this application can be achieved. For example, the binder may include but is not limited to at least of the foregoing binders.

Optionally, the negative electrode plate may further include a conductive layer, and the conductive layer is sandwiched between the negative electrode current collector and the negative electrode material layer. Composition of the conductive layer is not particularly limited in this application, and the conductive layer may be a conductive layer commonly used in the art. The conductive layer may include but is not limited to the foregoing conductive agent and the foregoing binder.

The electrochemical apparatus in this application further includes a separator. The separator is not particularly limited in this application, provided that the objectives of this application can be achieved. For example, the separator may include but is not limited to at least one of polyethylene (PE), polypropylene (PP), and polytetrafluoroethylene-based polyolefin (PO) separator, polyester film (for example, polyethylene terephthalate (PET) film), cellulose film, polyimide film (PI), polyamide film (PA), spandex film, aramid film, woven film, non-woven film (non-woven fabric), microporous film, composite film, separator paper, laminated film, or spinning film. The separator in this application may be of a porous structure. A pore size is not particularly limited, provided that the objectives of this application can be achieved. For example, the pore size may be 0.01 µm to 1 µm. Thickness of the separator is not particularly limited in this application, provided that the objectives of this application can be achieved. For example, the thickness of the separator may be 5 µm to 500 µm.

For example, the separator may include a substrate layer and a surface treatment layer. The substrate layer may be a non-woven fabric, film, or composite film having a porous structure. The substrate layer may be made of at least one of polyethylene, polypropylene, polyethylene terephthalate, or polyimide. Optionally, a polypropylene porous film, a polyethylene porous film, polypropylene non-woven fabric, polyethylene non-woven fabric, or a polypropylene-polyethylene-polypropylene porous composite film may be used. Optionally, the surface treatment layer is provided on at least one surface of the substrate layer, and the surface treatment layer may be a polymer layer or an inorganic substance layer, or a layer formed by a mixture of a polymer and an inorganic substance.

The inorganic substance layer may include but is not limited to an inorganic particle and a binder. The inorganic particle is not particularly limited in this application. For example, the inorganic particle may include but is not limited to at least one of aluminum oxide, silicon oxide, magnesium oxide, titanium oxide, hafnium dioxide, tin oxide, cerium oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited in this application. For example, the binder may include but is not limited to at least one of polyvinylidene fluoride, vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, or polyhexafluoropropylene. The polymer layer includes a polymer, and a material of the polymer may include but is not limited to at least one of polyamide, polyacrylonitrile, acrylate polymer, polyacrylic acid, polyacrylate salt, polyvinylpyrrolidone, polyvinyl ether, polyvinylidene fluoride, or poly(vinylidene fluoride-hexafluoropropylene).

In this application, the electrolyte may further include a lithium salt. The lithium salt is not particularly limited in this application, provided that the objectives of this application can be achieved. For example, the lithium salt may include but is not limited to at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, or lithium difluoroborate. Preferably, the lithium salt includes LiPF₆.

In this application, the electrolyte may further include a non-aqueous solvent. The non-aqueous solvent is not particularly limited in this application, provided that the objectives of this application can be achieved. For example, the non-aqueous solvent may include but is not limited to at least of carbonate compound, carboxylate compound, ether compound, or another organic solvent. The carbonate compound may include but is not limited to linear carbonate compound, cyclic carbonate compound, or fluorocarbonate compound. The linear carbonate compound may include but is not limited to at least one of dimethyl carbonate (DMC), diethyl carbonate (DEC), dipropyl carbonate (DPC), methyl propyl carbonate (MPC), ethyl propyl carbonate (EPC), or methyl ethyl carbonate (MEC). The cyclic carbonate may include but is not limited to at least one of ethylene carbonate (EC), propylene carbonate (PC), butylene carbonate (BC), or vinyl ethylene carbonate (VEC). The fluorocarbonate compound may include but is not limited to at least one of fluoroethylene carbonate (FEC), 4,5-difluoro-1,3-dioxolan-2-one, 4,4-difluoro-1,3-dioxolan-2-one, 4,4,5-trifluoro-1,3-dioxolan-2-one, 4,4,5,5-tetrafluoro-1,3-dioxolan-2-one, 4-fluoro-5-methyl-1,3-dioxolan-2-one, 4-fluoro-4-methyl-1,3-dioxolan-2-one, 4,5-difluoro-4-methyl-1,3-dioxolan-2-one, 4,4,5-trifluoro-5-methyl-1,3-dioxolan-2-one, or 4-trifluoroMethyl ethylence carbonate. The carboxylate compound may include but is not limited to at least one of methyl formate, methyl acetate, ethyl acetate, n-propyl acetate, tert-butyl acetate, methyl propionate, ethyl propionate, propyl propionate, γ-butyrolactone, decanolide, valerolactone, mevalonolactone, or caprolactone. The ether compound may include but is not limited to at least one of dibutyl ether, tetraethylene glycol dimethyl ether, diglyme, 1,2-dimethoxyethane, 1,2-diethoxyethane, ethoxymethoxy ethane, 2-methyltetrahydrofuran, or tetrahydrofuran. The another organic solvent may include but is not limited to at least one of dimethyl sulfoxide, 1,2-dioxolane, sulfolane, methyl-sulfolane, 1,3-dimethyl-2-imidazolidinone, N-methyl-2-pyrrolidone, methylamide, dimethylformamide, acetonitrile, trimethyl phosphate, triethyl phosphate, trioctyl phosphate, or phosphate ester.

The electrochemical apparatus in this application is not particularly limited, and may include any apparatus in which an electrochemical reaction occurs. In some embodiments, the electrochemical apparatus may include but is not limited to a lithium metal secondary battery, a lithium-ion secondary battery (lithium-ion battery), a lithium polymer secondary battery, or a lithium-ion polymer secondary battery.

A process for preparing the electrochemical apparatus is well known to persons skilled in the art, and is not particularly limited in this application. For example, the process may include but is not limited to the following steps: stacking the positive electrode plate, the separator, and the negative electrode plate in sequence, performing operations such as winding and folding on the stack as required to obtain an electrode assembly having a winding structure, placing the electrode assembly into a packaging bag, injecting an electrolyte into the packaging bag and sealing the packaging bag to obtain the electrochemical apparatus; or laminating the positive electrode plate, the separator, and the negative electrode plate in sequence, fixing four corners of the overall laminated structure with a tape to obtain an electrode assembly having a laminated structure, placing the electrode assembly into a packaging bag, injecting an electrolyte into the packaging bag and sealing the packaging bag to obtain the electrochemical apparatus. In addition, if necessary, an overcurrent prevention element, a guide plate, and the like may be placed in the packaging bag to prevent pressure increase, overcharge, and discharge in the electrochemical apparatus.

A second aspect of this application provides an electronic apparatus, including the electrochemical apparatus according to any one of the foregoing embodiments of this application.

The electronic apparatus in this application is not particularly limited, and the electronic apparatus may be any known electronic apparatus in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, or a lithium-ion capacitor.

This application provides an electrochemical apparatus. The electrochemical apparatus includes a positive electrode plate, where the positive electrode plate includes a positive electrode material layer, the positive electrode material layer includes a positive electrode active material, elements in the positive electrode active material include Li, Mn, Ni, Co, and Fe, and the positive electrode active material satisfies at least one of the following characteristics: (i) a ratio A of the number of Mn atoms to a total number of Ni, Co, and Fe atoms being 3.5 to 40; and (ii) a ratio B of the number of Li atoms to a total number of Mn, Ni, Co, and Fe atoms being 0.51 to 0.79. The elements in the positive electrode active material are controlled to satisfy the range of A and/or B, so that the electrochemical apparatus has good overall performance. For example, the electrochemical apparatus has relatively long service life, good high-temperature storage performance, low-temperature performance, and cycling performance, and the like.

### BRIEF DESCRIPTION OF DRAWINGS

To describe the technical solutions in the embodiments of this application and the prior art more clearly, the following briefly describes the accompanying drawings required for describing the embodiments and the prior art. Apparently, the accompanying drawings in the following description show merely some embodiments of this application.

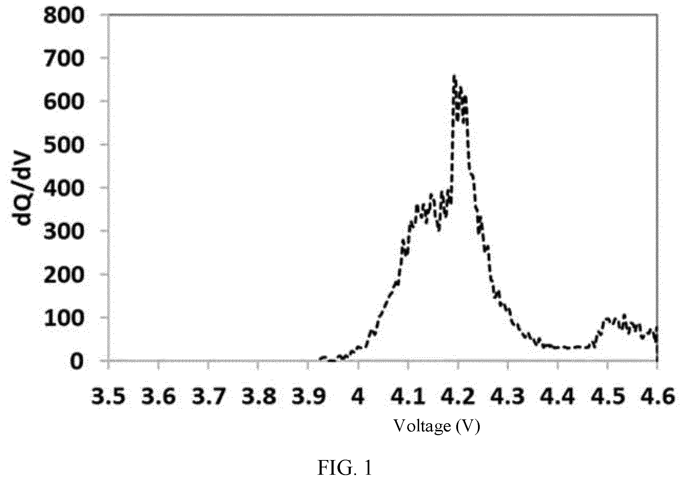

FIG. 1 is a capacity differential curve of a button cell assembled with a positive electrode plate and lithium metal in Example 17 of this application.

### DESCRIPTION OF EMBODIMENTS

To make the objectives, technical solutions, and advantages of this application clearer and more comprehensible, the following describes this application in detail with reference to embodiments. Apparently, the described embodiments are merely some but not all of the embodiments of this application. All other technical solutions obtained by persons of ordinary skill in the art based on the embodiments of this application fall within the protection scope of this application.

It should be noted that, in the specific embodiments of this application, a lithium-ion battery is used as an example of an electrochemical apparatus to explain this application. However, the electrochemical apparatus in this application is not limited to the lithium-ion battery.

### Examples

The following describes the embodiments of this application more specifically by using examples and comparative examples. Various tests and evaluations are performed in the following methods. In addition, unless otherwise specified, "part" and "%" are based on weight.

### Test method and device

### Test of percentages of elements

Test method: A lithium-ion battery was fully discharged to 2.8 V, and then disassembled to take a positive electrode plate. The positive electrode plate was soaked in a DMC solution for 24 hours and dried for later use. The treated positive electrode plate was weighed, digested, and diluted, and mass percentages of different elements were tested using an inductively coupled plasma emission spectrometer (Thermo ICAP6300). In each example or comparative example, six positive electrode plates were tested, and average values were used as final results. Mass percentage of element = mass of element/mass of positive electrode plate × 100%. The mass of the positive electrode plate excluded the mass of the positive electrode current collector.

### Test of charge capacity differential curve and calculation of P value

A lithium-ion battery was fully discharged to 2.8 V, and then disassembled to take a positive electrode plate. The positive electrode plate was soaked in a DMC solution for 24 hours and dried for later use. The positive electrode plate and lithium metal were assembled into a button cell in a glove box. At 25°C, the button cell was charged to 4.6 V at a constant current of 0.1C and discharged to 2.8 V at 0.1C (0.1C/0.1C). In a first-cycle charge capacity differential curve of the button cell, an area of a peak at 4.4 V to 4.6 V was denoted as S1, and an area of a peak at 3.9 V to 4.6 V was denoted as S2, where P = S1/S2.

FIG. 1 shows a first-cycle charge capacity differential curve of a button cell assembled with a positive electrode plate and lithium metal in Example 17. Through measurement, an area S1 of the peak at 4.4 V to 4.6 V was 10.7, and an area S2 of the peak at 3.9 V to 4.6 V was 100.4, where P was calculated to be 0.11. Vertical coordinate dQ/dV in the figure means a ratio of a difference of two measured capacities to a difference of their corresponding voltages.

### Test of first-cycle charge and discharge efficiency E

A lithium-ion battery was fully discharged to 2.8 V, and then disassembled to take a positive electrode plate. The positive electrode plate was soaked in a DMC solution for 24 hours and dried for later use. The positive electrode plate and lithium metal were assembled into a button cell in a glove box. At 25°C, the button cell was charged to 4.6 V at a constant current of 0.1C, charged to 50 µA at a constant voltage, and discharged to 2.8 V at 0.1C (0.1C/0.1C). First-cycle efficiency E = capacity at discharge cut-off voltage of 2.8 V/corresponding capacity at charge cut-off voltage of 4.6 V

### Gram capacity test

In an approximately 25°C environment, the lithium-ion battery was charged at a constant current of 0.5C (that is, a current value at which a theoretical capacity is completely discharged within 2 hours) and then charged at a constant voltage until an upper-limit voltage was approximately 4.2 V, and discharged at a constant current of 0.2C until a final voltage was approximately 2.8 V, and a first-cycle discharge capacity was recorded. A ratio of the first-cycle discharge capacity and the mass of the positive electrode plate was recorded as a gram capacity of the positive electrode plate. In each example or comparative example, four positive electrode plates were tested, and an average value was used as a final result. The mass of the positive electrode plate excluded the mass of the positive electrode current collector.

### High-temperature cycling performance test

Thickness of the lithium-ion battery under test was tested and recorded as an initial thickness. In an approximately 45°C environment, the lithium-ion battery was and charged at a constant current of 0.5C and then charged at a constant voltage until an upper-limit voltage was approximately 4.2 V, and discharged at a constant current of 1C until a final voltage was approximately 2.8 V, and a first-cycle discharge capacity was recorded as an initial discharge capacity. Then, 500 charge and discharge cycles were performed in the same steps and a discharge capacity of the lithium-ion battery after 500 charge and discharge cycles was recorded as a cycling discharge capacity, and thickness of the lithium-ion battery after 500 charge and discharge cycles was measured and recorded as a cycling thickness.

A cycling capacity retention rate of the lithium-ion battery at 45°C was calculated by using the following equation: capacity retention rate after 500 cycles at 45°C = (cycling discharge capacity/initial discharge capacity) × 100%.

A cycling swelling rate of the lithium-ion battery at 45°C was calculated by using the following equation: cycling swelling rate after 500 cycles at 45°C = (cycling thickness - initial thickness)/initial thickness × 100%

In each example or comparative example, four lithium-ion batteries were tested, and an average value was used as a final test result.

### High-temperature storage performance test

The lithium-ion battery was left standing for 30 min in a 25°C environment, charged to 4.2 V at a constant current of 0.2C, charged to 0.05C at a constant voltage of 4.2 V, left standing for 30 min, and discharged to 2.8 V at 0.5C. A discharge capacity at this moment was recorded as a capacity of the lithium-ion battery before storage. Then, the battery in a fully charged state was placed in an approximately 60°C oven for seven days, and then a capacity of the battery after storage was tested. A specific test process was as follows: The lithium-ion battery was left standing for 30 min in the 25°C environment, charged to 4.2 V at a constant current of 0.2C, charged to 0.05C at a constant voltage of 4.2 V, left standing for 30 min, and discharged to 2.8 V at 0.5C. A discharge capacity at this moment was recorded as a capacity of the lithium-ion battery after storage.

A high-temperature storage capacity retention rate of the lithium-ion battery at 60°C was calculated by using the following equation: high-temperature storage capacity retention rate at 60°C = capacity after storage/capacity before storage × 100%.

In each example or comparative example, four lithium-ion batteries were tested, and an average value was used as a final result.

### Low-temperature performance test

The lithium-ion battery was left standing for 30 min in a 25°C environment, charged to 4.2 V at a constant current of 0.2C, charged to 0.05C at a constant voltage of 4.2 V, left standing for 30 min, and discharged to 2.8 V at 0.5C. A discharge capacity at this moment was recorded as an actual capacity C1 of the lithium-ion battery. Then, the lithium-ion battery was left standing for 60 min in a -10°C environment, charged to 4.2 V at a constant current of 0.2C, charged to 0.05C at a constant voltage of 4.2 V, left standing for 30 min, and discharged to 2.8 V at 0.5C. A discharge capacity at this moment was recorded as an actual capacity C2 of the lithium-ion battery. Low-temperature discharge capacity retention rate at -10°C = C2/C1 × 100%.

### Example 1

### <Preparation of positive electrode plate>

Lithium manganese oxide spinel LiMn₂O₄ and layered lithium nickel cobalt manganate Li(Ni_{0.55}Co_{0.15}Mn_{0.30})O₂ were mixed at a mass ratio of 67:33 to obtain a positive electrode active material. Then, the positive electrode active material, a conductive agent acetylene black, and a binder polyvinylidene fluoride were mixed at a mass ratio of 96.5:2:1.5, and then N-methylpyrrolidone (NMP) was added. The resulting mixture was stirred into a uniform transparent system under the action of a vacuum mixer to obtain a positive electrode slurry, where a solid content of the positive electrode slurry was 70%. The positive electrode slurry was evenly applied on one surface of a 12 µm thick positive electrode current collector aluminum foil. The aluminum foil was dried for 1 h at 120°C to obtain a positive electrode plate coated with a positive electrode material layer on one surface, and the amount of the positive electrode active material in the positive electrode material layer was 425 g/m². The foregoing steps were repeated on the other surface of the aluminum foil to obtain the positive electrode plate coated with the positive electrode active material on two surfaces. After cold pressing, cutting, and slitting, drying were performed in vacuum at 120°C for 1 h to obtain a 74 mm × 867 mm positive electrode plate. LiMn₂O₄ was synthesized with lithium carbonate and manganese dioxide at 730°C, with a mass ratio of lithium carbonate to manganese dioxide being 0.55. Dᵥ50 of the positive electrode active material was 11 µm, and Dᵥ90 thereof was 19 µm.

### <Preparation of negative electrode plate>

A negative electrode active material artificial graphite, a conductive agent acetylene black, a binder butadiene styrene rubber (SBR), and a thickener sodium carboxymethyl cellulose (CMC) were mixed at a mass ratio of 95:2:2:1, with deionized water added. The foregoing substances were mixed in a vacuum mixer to obtain a negative electrode slurry, where a solid content of the negative electrode slurry was 75%. The negative electrode slurry was evenly applied on one surface of a 12 µm thick negative electrode current collector copper foil; and the copper foil was dried at 120°C to obtain a negative electrode plate coated with a negative electrode material layer on one surface, and the amount of the negative electrode active material in the negative electrode material layers was 112 g/m². The foregoing steps were repeated on the other surface of the copper foil to obtain the negative electrode plate coated with the negative electrode active material on two surfaces. After cold pressing, cutting, and slitting, drying were performed in vacuum at 120°C for 1 h to obtain a 76 mm × 869 mm negative electrode plate.

### <Preparation of electrolyte>

In a dry argon atmosphere glove box, organic solvents propylene carbonate (PC), ethylene carbonate (EC), and diethyl carbonate (DEC) were mixed at a mass ratio of 1:1:1, and then a lithium salt lithium hexafluorophosphate (LiPF₆) was added to the organic solvents for dissolving and mixed well, to obtain an electrolyte. A concentration of LiPF₆ in the electrolyte was 1.15 mol/L.

### <Preparation of separator>

A porous polyethylene (PE) film (provided by Celgard) with a thickness of 7 µm was used, with a pore size of 0.1 µm.

### <Preparation of lithium-ion battery>

The prepared positive electrode plate, separator, and negative electrode plate were stacked in sequence, so that the separator was sandwiched between the positive electrode plate and the negative electrode plate for separation. Then the resulting stack was wound to obtain an electrode assembly. The electrode assembly was put into an aluminum-plastic film packaging bag which was filled with the electrolyte after drying, followed by processes such as vacuum packaging, standing, formation, degassing, and cutting to obtain a lithium-ion battery.

Examples 2 to 11 were the same as Example 1 except that a type and a mass ratio of the positive electrode active material were adjusted according to Table 1.

Examples 12 to 15 were the same as Example 1 except that a mass ratio of lithium carbonate and manganese dioxide was adjusted to 0.5, 0.55, 0.57, and 0.59 to obtain a B value shown in Table 1, and that a type and a mass ratio of the positive electrode active material were adjusted according to Table 1.

Examples 16 to 19 were the same as Example 13 except that a type and a mass ratio of the positive electrode active material were adjusted according to Table 2 to obtain a P value shown in Table 2.

Examples 20 to 23 were the same as Example 13 except that an amount of the positive electrode active material in the positive electrode material layer and an amount of the negative electrode active material in the negative electrode material layer were adjusted according to Table 3.

Examples 24 to 28 were the same as Example 13 except that a particle size of the positive electrode active material was adjusted according to Table 4.

Comparative Example 1 was the same as Example 1 except that a type and a mass ratio of the positive electrode active material were adjusted according to Table 1.

Comparative Examples 2 and 3 were the same as Example 13 except that a type and a mass ratio of the positive electrode active material were adjusted according to Table 2.

Comparative Examples 4 and 5 were the same as Example 13 except that an amount of the positive electrode active material in the positive electrode material layer and an amount of the negative electrode active material in the negative electrode material layer were adjusted according to Table 3.

Comparative Example 6 was the same as Example 13 except that a particle size of the positive electrode active material was adjusted according to Table 4.

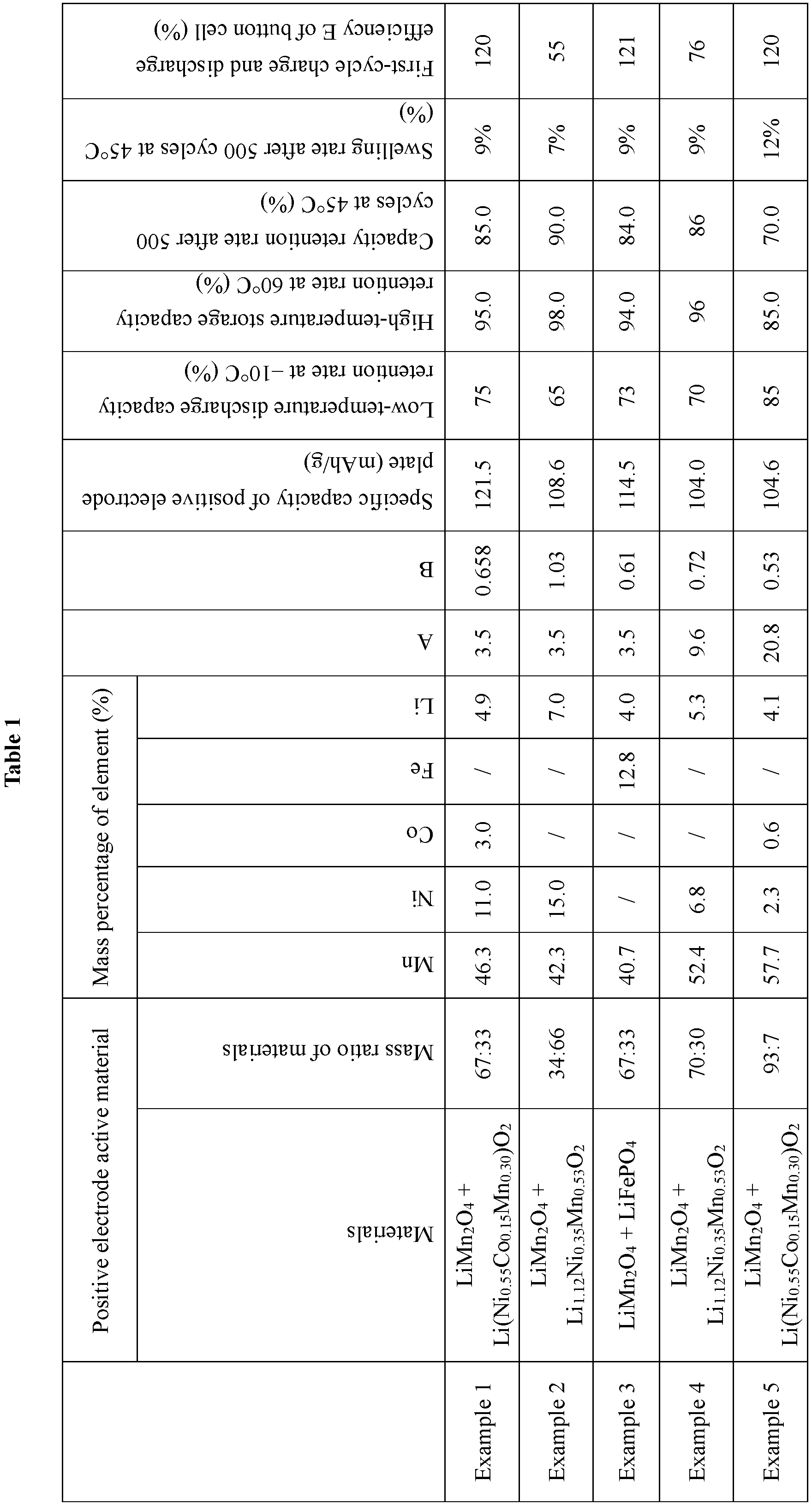

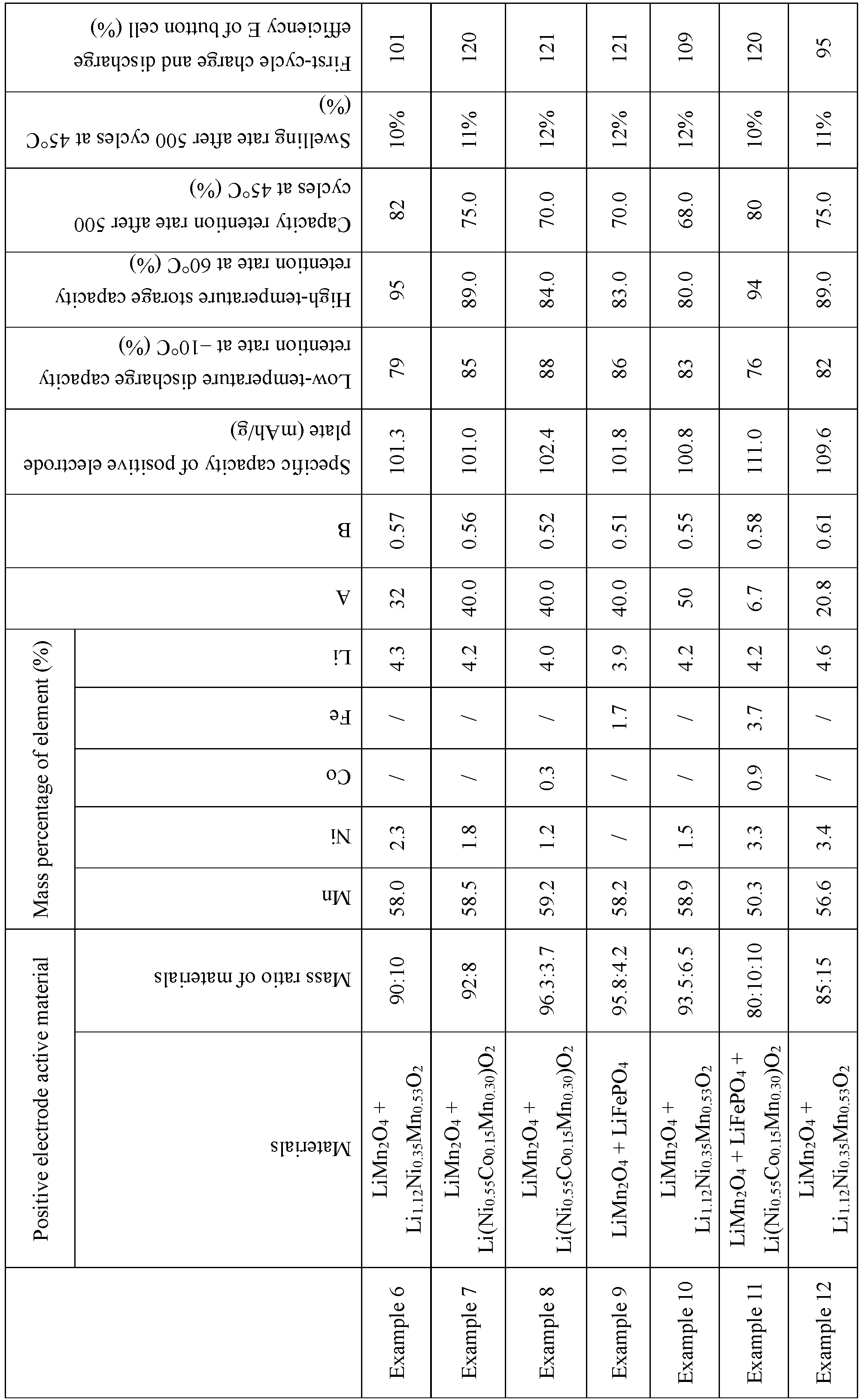

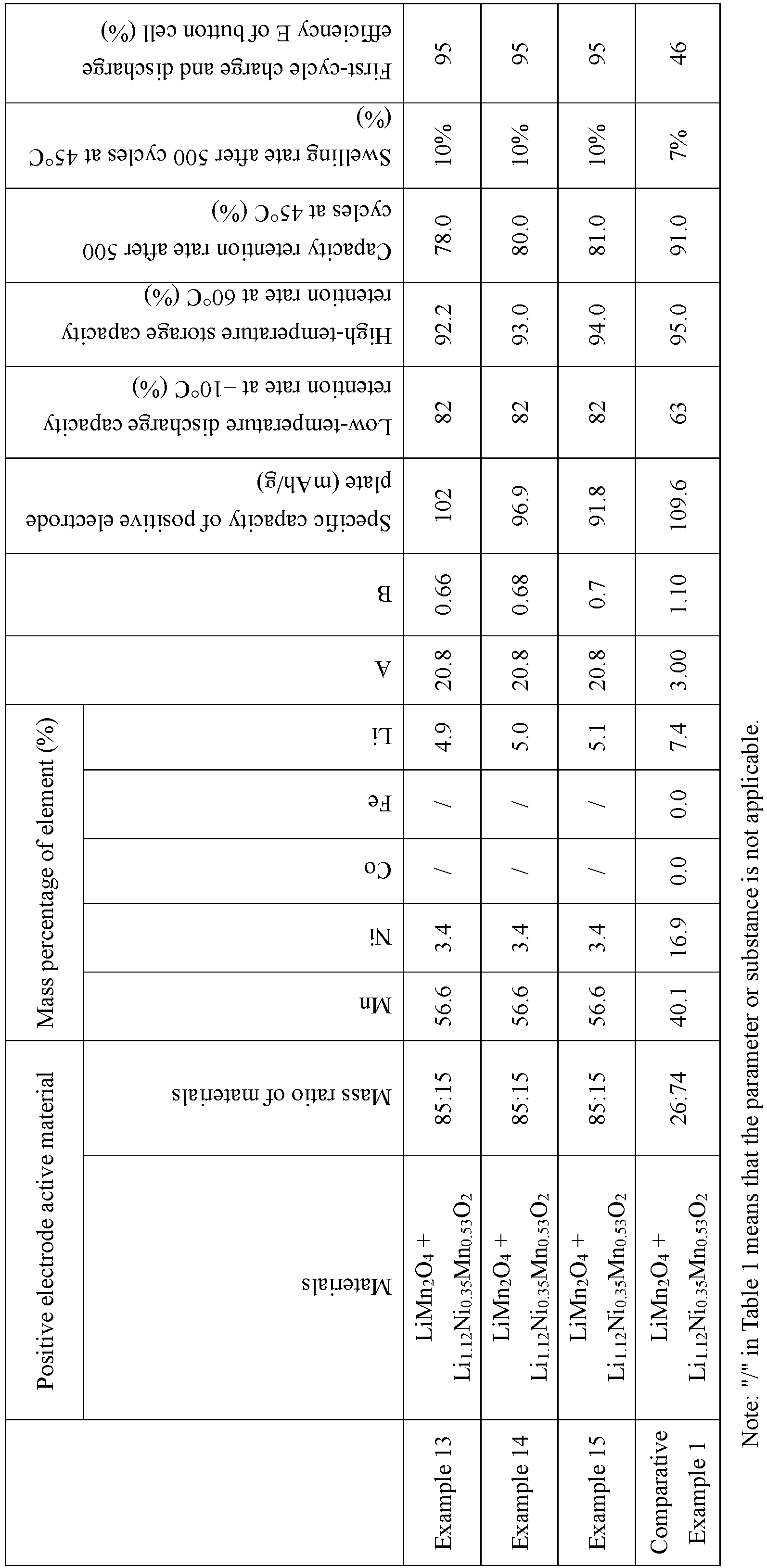

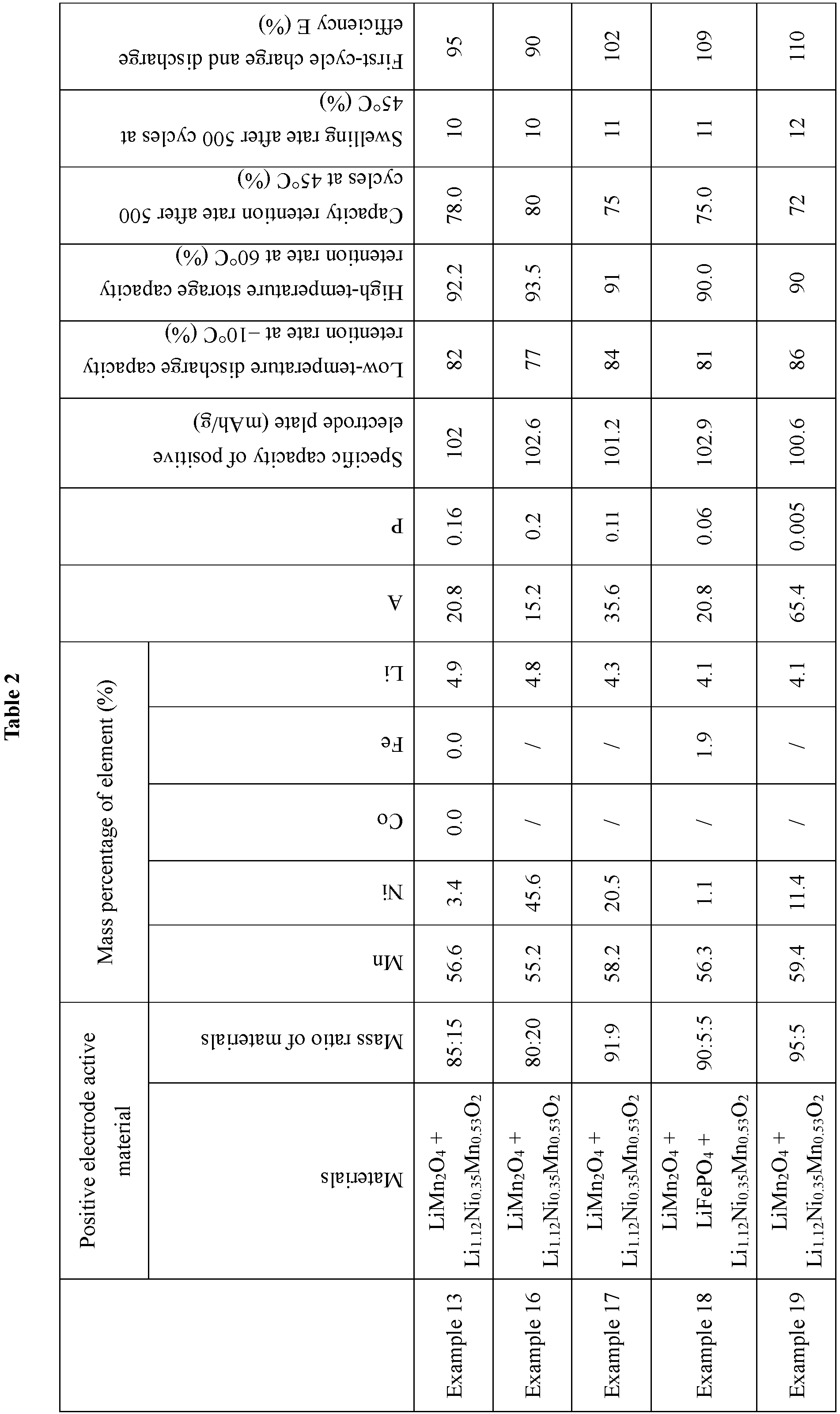

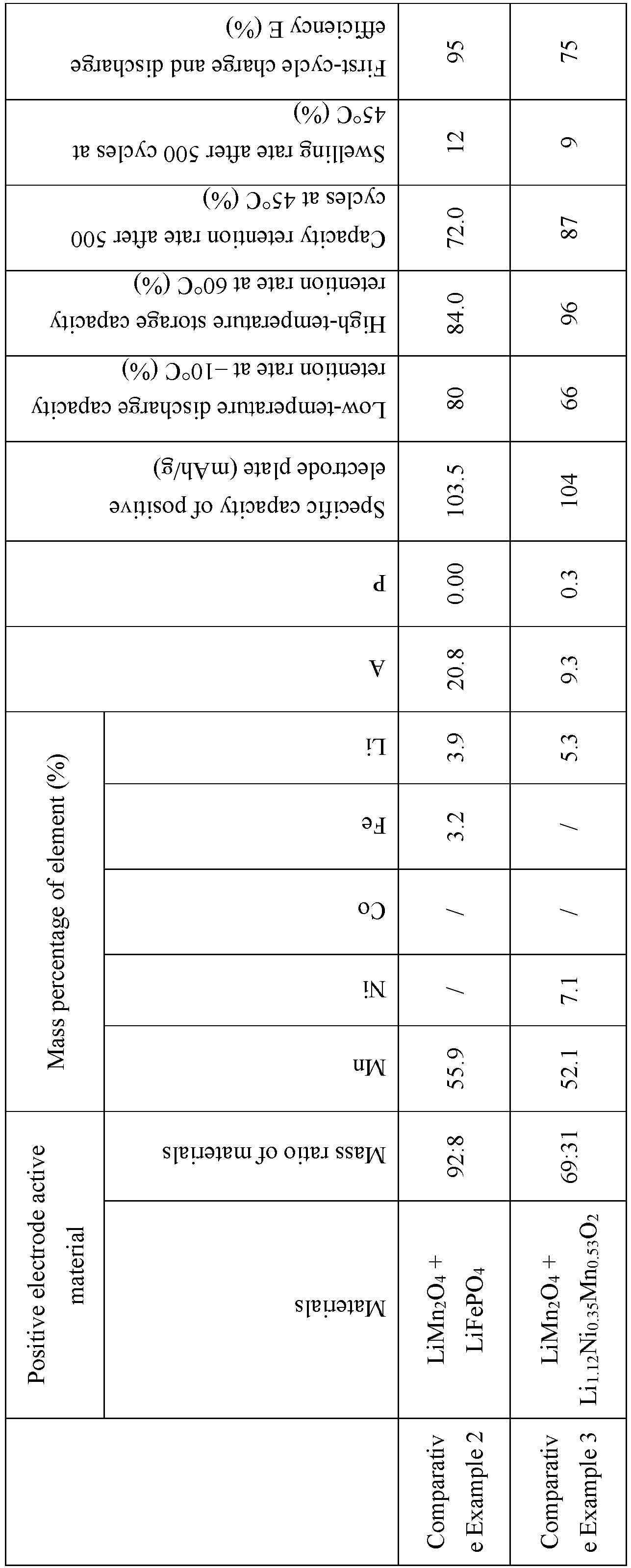

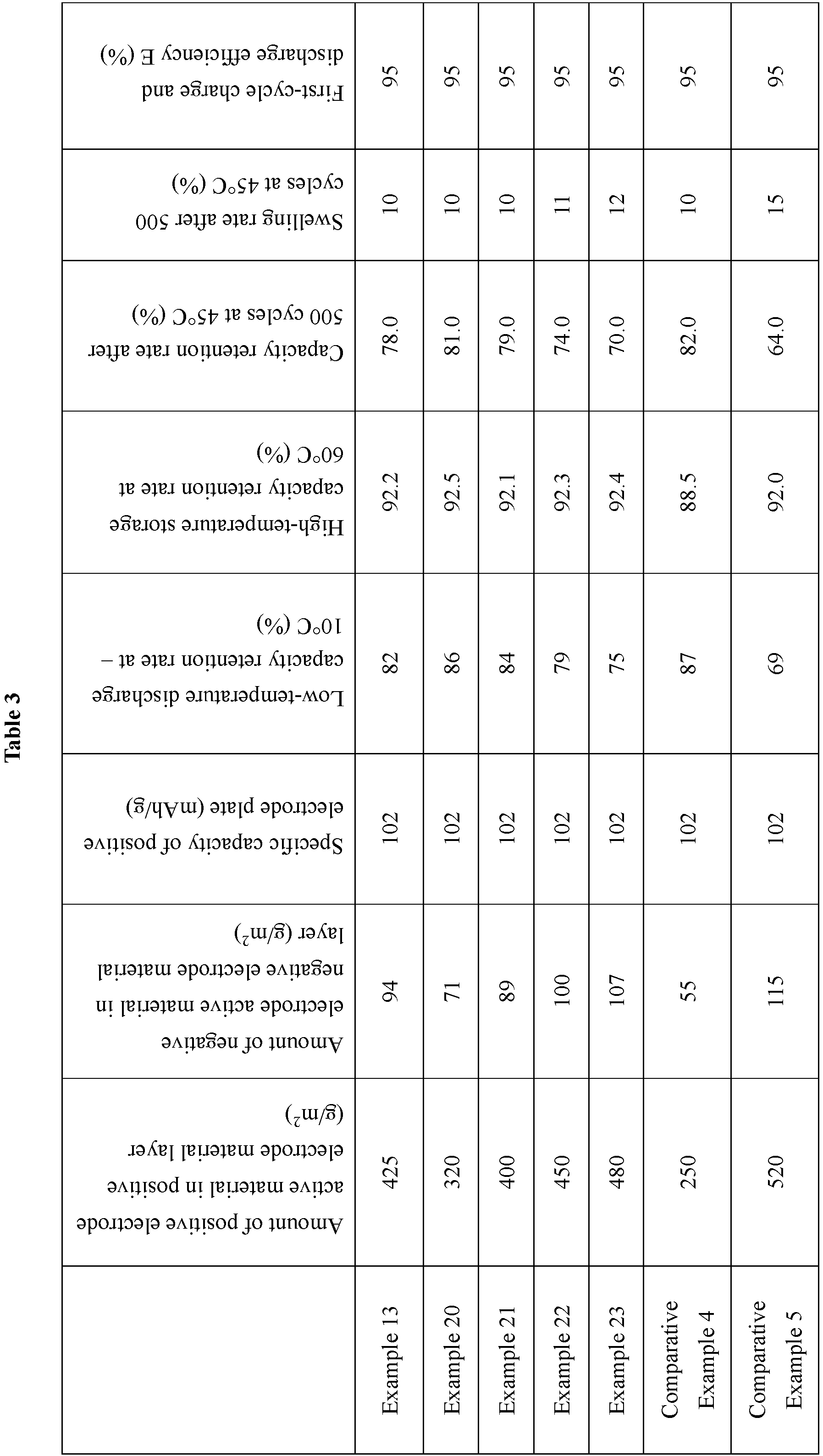

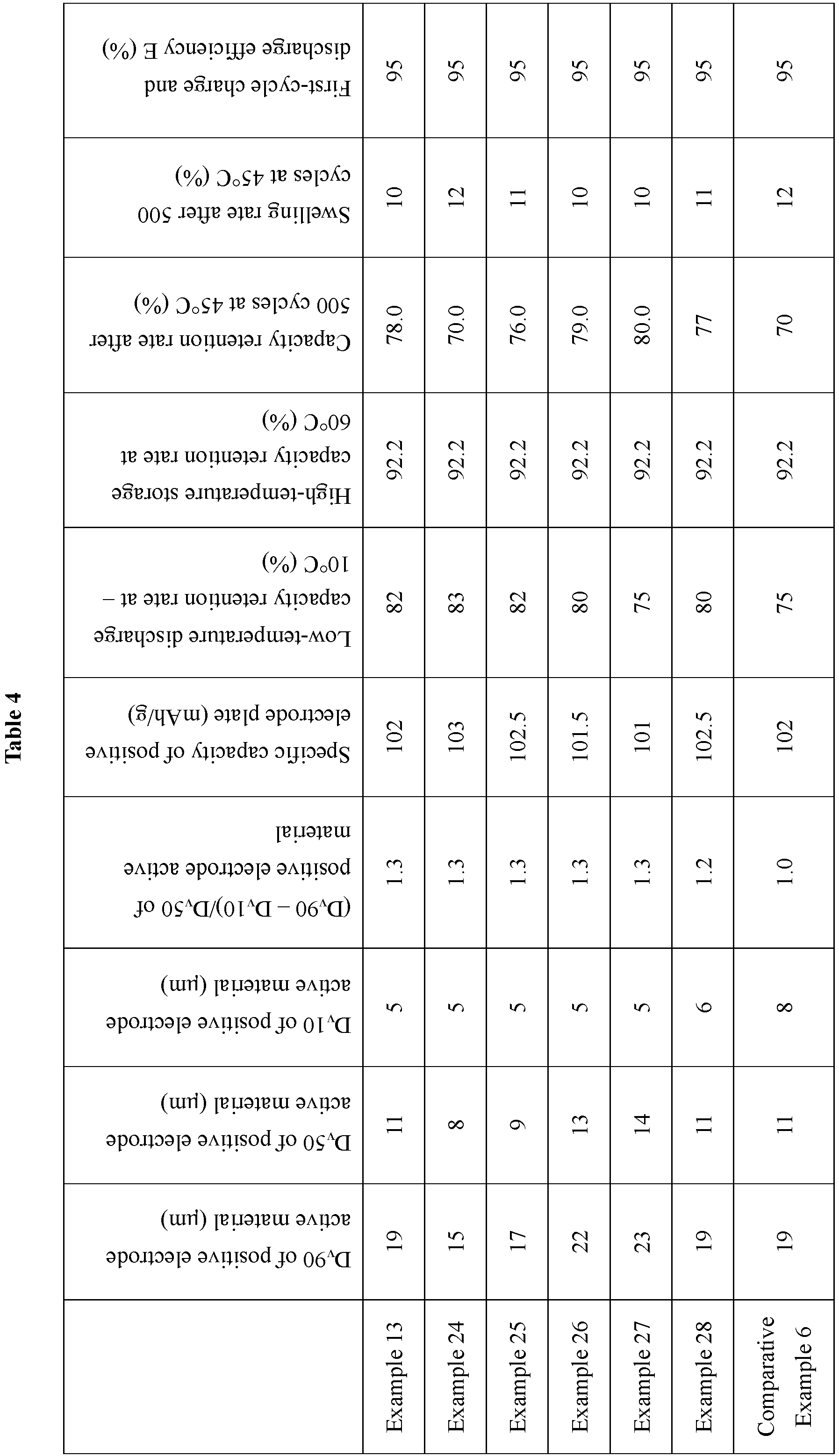

Referring to Table 1, it can be seen from Examples 1 to 15 and Comparative Example 1 that when the value of A and/or B of the positive electrode active material is within the range of this application, the overall performance of the electrochemical apparatus can be improved. For example, the electrochemical apparatus has good low-temperature performance, high-temperature storage performance, high-temperature cycling performance, and the first-cycle charge and discharge efficiency of the button cell is obviously improved.

It can be seen from Examples 12 to 15 that when the value of A remains unchanged and the value of B increases, the specific capacity of the positive electrode plate decreases, and the high-temperature storage performance and the high-temperature cycling performance are gradually improved.

Referring to Table 2, it can be seen from Example 13, Examples 16 to 19, and Comparative Example 2 and Comparative Example 3 that when the value of P is within the range of this application, the overall performance of the electrochemical apparatus can be improved. For example, the electrochemical apparatus has good low-temperature performance, high-temperature storage performance, and high-temperature cycling performance.

The amount of the positive electrode active material in the positive electrode material layer usually affects the overall performance of the electrochemical apparatus. Referring to Table 3, it can be seen from Example 13, Examples 20 to 23, and Comparative Example 4 and Comparative Example 5 that when the amount of the positive electrode active material in the positive electrode material layer is within the range of this application, the electrochemical apparatus has good overall performance. For example, the electrochemical apparatus has good low-temperature performance, high-temperature storage performance, and high-temperature cycling performance.

A relationship between the particle sizes of the positive electrode active material usually affects the overall performance of the electrochemical apparatus. Referring to Table 4, it can be seen from Example 13, Examples 24 to 28, and Comparative Example 6 that when values of Dᵥ50, Dᵥ90, and (Dᵥ90 - Dᵥ10)/Dᵥ50 of the positive electrode active material are all within the range of this application, the electrochemical apparatus has good overall performance. For example, the electrochemical apparatus has good low-temperature performance, high-temperature storage performance, and high-temperature cycling performance.

The foregoing descriptions are merely preferable embodiments of this application, but are not intended to limit this application. Any modification, equivalent replacement, or improvement made without departing from the spirit and principle of this application shall fall within the protection scope of this application.

## Claims

1. An electrochemical apparatus, comprising a positive electrode plate, wherein the positive electrode plate comprises a positive electrode material layer, the positive electrode material layer comprises a positive electrode active material, elements in the positive electrode active material comprise Li, Mn, Ni, Co, and Fe, and the positive electrode active material satisfies at least one of the following characteristics:
(i) a ratio A of the number of Mn atoms to a total number of Ni, Co, and Fe atoms being 3.5 to 40; and
(ii) a ratio B of the number of Li atoms to a total number of Mn, Ni, Co, and Fe atoms being 0.51 to 0.79.

2. The electrochemical apparatus according to claim 1, wherein 6 ≤ A/B ≤ 40.

3. The electrochemical apparatus according to claim 1, wherein the positive electrode plate in the electrochemical apparatus and lithium metal are assembled into a button cell; and in a first-cycle charge capacity differential curve of the button cell, a ratio P of an area of a peak at 4.4 V to 4.6 V to an area of a peak at 3.9 V to 4.6 V is 0.005 to 0.2.

4. The electrochemical apparatus according to claim 3, wherein 0.21-0.0056A ≤ P ≤ 0.2.

5. The electrochemical apparatus according to claim 1, wherein the positive electrode plate in the electrochemical apparatus and lithium metal are assembled into a button cell; and a first-cycle charge and discharge efficiency E of the button cell at 2.8 V to 4.6 Vis 90% to 110%.

6. The electrochemical apparatus according to claim 1, wherein Dᵥ50 of the positive electrode active material is 8 µm to 14 µm, and Dᵥ90 of the positive electrode active material is less than or equal to 30 µm, wherein 1.2 ≤ (Dᵥ90 - Dᵥ10)/Dᵥ50 ≤ 2.2.

7. The electrochemical apparatus according to claim 1, wherein the positive electrode active material comprises at least one of lithium manganese oxide spinel, lithium nickel cobalt manganate, lithium iron phosphate, or lithium-rich manganese-based material.

8. The electrochemical apparatus according to claim 1, wherein an amount of the positive electrode active material in the positive electrode material layer is 320 g/m² to 480 g/m².

9. The electrochemical apparatus according to claim 1, further comprising an electrolyte, wherein the electrolyte comprises a sulfur-oxygen double bond-containing compound; the sulfur-oxygen double bond-containing compound comprises 1,3-propane sultone and/or ethylene sulfate; and based on a total mass of the electrolyte, a mass percentage of the sulfur-oxygen double bond-containing compound is 0.01% to 2%.

10. An electronic apparatus, comprising the electrochemical apparatus according to any one of claims 1 to 9.
